# EUROPÄISCHE PATENTANMELDUNG

(11) **EP 2 493 052 A1**
(43) Veröffentlichungstag der Anmeldung: **29.08.2012**
(21) Anmeldenummer: 11155402.8
(22) Anmeldetag: 22.02.2011
(51) Int. Cl.: H02J 7/34, B60R 16/03

(54) **Spannungsstabilisierungseinrichtung**

(71) Anmelder: Flextronics International Kft., 8900 Zalaegerszeg (HU)
(72) Erfinder: Kocur, Vít, 33202, Starý Plzenec (CZ); Gerhát, Martin, 28126, Lipec (CZ)
(74) Vertreter: Rupprecht, Kay

(57) **Zusammenfassung**

Es wird eine Spannungsstabilisierungseinrichtung (1) für ein Kraftfahrzeugbordnetz zur Stabilisierung wenigstens eines spannungssensitiven Verbrauchers (9) vorgeschlagen. Die Spannungsstabilisierungseinrichtung zeichnet sich durch eine DC/DC-Wandlerschaltung (3), einen Energiespeicher (5) und einen Umschalter (7) aus, die derart ausgebildet und angeordnet sind, dass der Energiespeicher (5) durch die DC/DC-Wandlerschaltung (3) aufladbar ist und der Umschalter (7) eine elektrische Verbindung zwischen dem spannungssensitiven Verbraucher (9) und dem Energiespeicher (5) derart ermöglicht, dass der Energiespeicher (5) im Bedarfsfall eine Stabilisierungsspannung (U_{stab}) an dem Verbraucher (9) bereitstellt.

## Beschreibung

Die Erfindung betrifft eine Spannungsstabilisierungseinrichtung für ein Kraftfahrzeugbordnetz zur Stabilisierung eines spannungssensitiven Verbrauchers gemäß dem Oberbegriff des Anspruchs 1.

Spannungsstabilisierungseinrichtungen der hier angesprochenen Art werden insbesondere zur Spannungsstabilisierung bei Start-Stopp-Systemen eingesetzt. Die Funktionsweise von Start-Stopp-Systemen wird im Stand der Technik vielfach beschrieben, sodass hier nicht näher darauf eingegangen werden soll. Ein Phänomen eines normalen Startvorgangs ist die hohe Leistung, die der Anlasser benötigt. Dadurch kann die Spannung im Bordnetz während des Motorstarts von den üblichen 12 V auf bis zu 6 V einbrechen. Wenn der Motor nach dem Stopp wieder startet, kommt es beispielsweise bei Audio- und Navigationssystemen durch den kurzfristigen Spannungseinbruch typischerweise zu einem Neustart dieser Geräte. Insbesondere bei Start-Stopp-Systemen, die gerade ein geräuschloses und von den Insassen eines Kraftfahrzeugs unbemerktes Stoppen und Starten des Motors gewährleisten sollen, ist ein derartiger Spannungseinbruch inakzeptabel.

Um die genannten Probleme während des Startvorgangs zu vermeiden, ist in bekannten Start-Stopp-Systemen von Kraftfahrzeugen ein durch eine Schalteranordnung überbrückbarer DC/DC-Aufwärtswandler, auch Step-Up-Converter oder Boost-Converter genannt, vorgesehen, der während des Startvorgangs die Stromführung übernimmt und eine größere Ausgangsspannung als die Eingangsspannung an einem spannungssensitiven Verbraucher bereitstellt. Im Falle eines Startvorgangs erfolgt also ein Stromfluss von der Fahrzeugbatterie ausschließlich über den DC/DC-Aufwärtswandler, der daraufhin die Spannung zumindest für Teile des elektrischen Bordnetzes stabilisiert. Wenn der Startvorgang beendet ist, werden die Schalter geschlossen, sodass eine Stromführung über die Schalteranordnung erfolgt und der DC/DC-Aufwärtswandler entlastet wird. Ein Nachteil der bekannten Spannungsstabilisierungseinrichtungen liegt darin, dass durch die Verwendung von DC/DC-Aufwärtswandlereinheiten hohe Kosten verursacht werden.

Aufgabe der vorliegenden Erfindung ist es daher, eine Spannungsstabilisierungseinrichtung zu schaffen, die bei gleicher Wirksamkeit kostengünstiger herstellbar ist.

Zur Lösung der oben genannten Aufgabe wird eine Spannungsstabilisierungseinrichtung mit den Merkmalen des Anspruchs 1 vorgeschlagen. Die Spannungsstabilisierungseinrichtung für ein Kraftfahrzeugbordnetz dient zur Stabilisierung wenigstens eines spannungssensitiven Verbrauchers und zeichnet sich dadurch aus, dass eine DC/DC-Wandlerschaltung, ein Energiespeicher und ein Umschalter vorgesehen sind, die derart ausgebildet und angeordnet sind, dass der Energiespeicher durch die DC/DC-Wandlerschaltung aufladbar ist und der Umschalter eine elektrische Verbindung zwischen dem wenigstens einen spannungssensitiven Verbraucher und dem Energiespeicher derart ermöglicht, dass der Energiespeicher im Bedarfsfall eine Stabilisierungsspannung an dem Verbraucher bereitstellt.

Ein wesentlicher Punkt der Erfindung liegt somit darin, dass statt einer Umleitung des Batteriestroms über einen Aufwärtswandler im Falle eines insbesondere durch einen Startvorgang verursachten Spannungseinbruchs eine Stabilisierungsspannung durch eine zusätzliche Energiequelle bereitgestellt wird, die einfach während eines "Normalbetriebs" des Kraftfahrzeugbordnetzes (im Folgenden "Bordnetz" genannt) durch die DC/DC-Wandlerschaltung wieder aufgeladen werden kann. Unter "Normalbetrieb" wird dabei ein Betrieb des Bordnetzes ohne Spannungseinbruch verstanden, im Regelfall also der Zustand des Bordnetzes vor und nach einem Startvorgang des Kraftfahrzeugs. Insgesamt ergeben sich durch die vorliegende Erfindung erhebliche Vorteile gegenüber den bekannten Spannungsstabilisierungseinrichtungen. So wird für die Spannungsstabilisierungseinrichtung gemäß der vorliegenden Erfindung nur eine wesentlich geringere Leistung der DC/DC-Wandlerschaltung benötigt, nämlich zum Aufladen des Energiespeichers. Dadurch kann die DC/DC-Wandlerschaltung und damit die gesamte Spannungsstabilisierungseinrichtung insgesamt kleinere Abmessungen aufweisen und sie ist außerdem kostengünstiger herstellbar. Ein weiterer Vorteil liegt in den verbesserten EMV-Eigenschaften (EMV = elektromagnetische Verträglichkeit).

Vorzugsweise handelt es sich bei dem Energiespeicher um einen Kondensator, insbesondere um einen Doppelschicht-Kondensator, der auch als Superkondensator oder Supercap bezeichnet wird. Der Doppelschicht-Kondensator kann insbesondere als Pseudokondensator ausgebildet sein. Es ist jedoch ohne Weiteres denkbar statt einem Kondensator als Energiespeicher eine Batterie einzusetzen. Die DC/DC-Wandlerschaltung und der Energiespeicher sind vorzugsweise parallel geschaltet, sodass im Normalbetrieb des Bordnetzes der Energiespeicher durch die DC/DC-Wandlerschaltung aufgeladen werden kann, während eine Betriebsspannung an dem wenigstens einen spannungssensitiven Verbraucher ausschließlich durch eine Energiequelle und insbesondere durch die Fahrzeugbatterie bereitgestellt wird. Bei dem Umschalter kann es sich um ein Relais handeln. Grundsätzlich können aber auch andere Schaltertypen zum Einsatz kommen. Der Umschalter ist vorzugsweise derart umschaltbar angeordnet, dass während des Normalbetriebs des Bordnetzes ausschließlich die durch die Energiequelle erzeugte Betriebsspannung an dem Verbraucher anliegt, und dass im Falle eines Spannungseinbruchs im Kraftfahrzeugbordnetz zusätzlich die Stabilisierungsspannung des Energiespeichers an dem Verbraucher bereitgestellt wird. Schließlich ist vorzugsweise noch eine Steuerungseinrichtung zur Steuerung der Aufladung des Energiespeichers und zur Steuerung des Umschaltzeitpunktes des Umschalters vorgesehen. Die Steuerungseinrichtung umfasst vorzugsweise einen Mikrocontroller und sorgt für ein Umschalten des Umschalters zum richtigen Zeitpunkt und sorgt außerdem dafür, dass die Energiequelle durch den DC/DC-Wandler mit einer gewünschten bzw. geeigneten Spannung aufgeladen wird. Weiterhin kann die Steuerungseinrichtung Diagnosefunktionen erfüllen, sodass beispielsweise ein Fehlbetrieb der Spannungsstabilisierungseinrichtung erkannt und entsprechende Gegenmaßnahmen eingeleitet werden können.

Die Erfindung wird im Folgenden anhand der Zeichnung näher erläutert. Es zeigen:
- Fig. 1: ein Schaltbild der Spannungsstabilisierungseinrichtung gemäß der Erfin-dung;
- Fig. 2: ein Schaltbild der Spannungsstabilisierungseinrichtung in einem ersten Betriebszustand, und
- Fig. 3: ein Schaltbild der Spannungsstabilisierungseinrichtung in einem zweiten Betriebszustand.

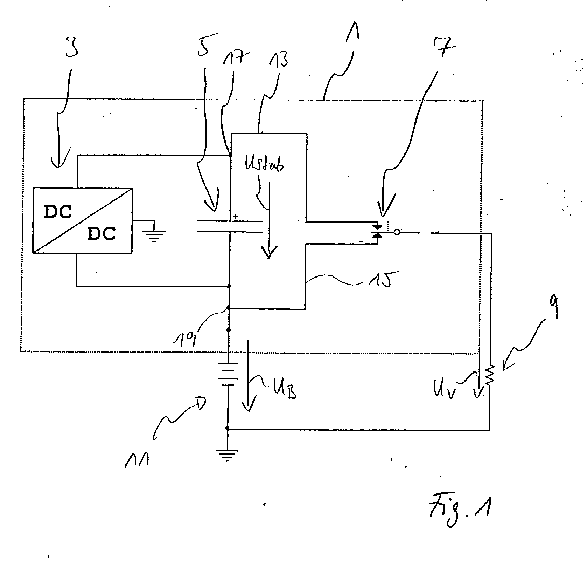

Die Fig. 1 zeigt ein Schaltbild einer Spannungsstabilisierungseinrichtung 1 gemäß der Erfindung. Die Spannungsstabilisierungseinrichtung 1 umfasst eine DC/DC-Wandlerschaltung 3, einen Energiespeicher 5 und einen Umschalter 7, wobei die DC/DC-Wandlerschaltung 3 und der Energiespeicher 5 parallel geschaltet sind. Die Spannungsstabilisierungseinrichtung 1 dient zur Bereitstellung einer Stabilisierungsspannung U_{stab} im Falle eines Spannungseinbruchs an mindestens einem spannungssensitiven Verbraucher 9. Unter einem spannungssensitiven Verbraucher wird dabei ein Verbraucher verstanden, der bei einem Spannungsabfall kurzzeitig ausfallen kann, wie beispielsweise Entertainment- bzw. Infotainment-Geräte (z.B. Autoradio und andere Komfort-Steuergeräte). Bei solchen Geräten ist ein Ausfall nicht akzeptabel und wird gemäß der vorliegenden Erfindung durch die Bereitstellung einer Stabilisierungsspannung vermieden.

Eine Energiequelle 11 stellt an dem spannungssensitiven Verbraucher 9 eine Betriebsspannung U_{B} bereit, wobei es sich bei der Energiequelle 11 üblicherweise um eine Batterie, insbesondere um die Fahrzeugbatterie handelt.

Der Umschalter 7 ist vorzugsweise als Relais ausgebildet und ermöglicht das Zu- und Abschalten des Energiespeichers 5 zu bzw. von dem Verbraucher 9. In der Fig. 1 wird rein beispielhaft auf einen einzigen Verbraucher Bezug genommen, obwohl mehrere Verbraucher durch die Spannungsstabilisierungseinrichtung 1 stabilisiert werden können. Der Umschalter 7 kann zwei Schaltzustände einnehmen, wobei er in dem ersten Schaltzustand 13 eine serielle Verbindung zwischen dem Verbraucher 9 und dem Energiespeicher 5 derart herstellt, dass sich ein geschlossener Stromkreis zwischen dem Verbraucher 9, dem Energiespeicher 5 und der Energiequelle 11 ergibt. In diesem Schaltzustand liegt an dem Verbraucher sowohl die Betriebsspannung U_{B} als auch die Stabilisierungsspannung U_{stab} an. Der zweite Schaltzustand 15 des Umschalters 7 umgeht den Energiespeicher 5 und stellt folglich eine direkte serielle Verbindung mit der Energiequelle 11 her. In diesem Schaltzustand liegt folglich nur die Betriebsspannung U_{B} an dem Verbraucher an. Die beiden Schaltzustände 13 und 15 sind in der Fig. 1 schematisch mittels Verbindungslinien dargestellt, welche die alternativen Schaltzustände verdeutlichen sollen.

Das Umschalten zwischen den beiden Schaltzuständen 13 und 15 wird vorzugsweise durch eine in der Figur nicht gezeigte Steuereinrichtung gesteuert, die insbesondere den Umschaltzeitpunkt in Abhängigkeit von den Bordnetzbedingungen steuert.

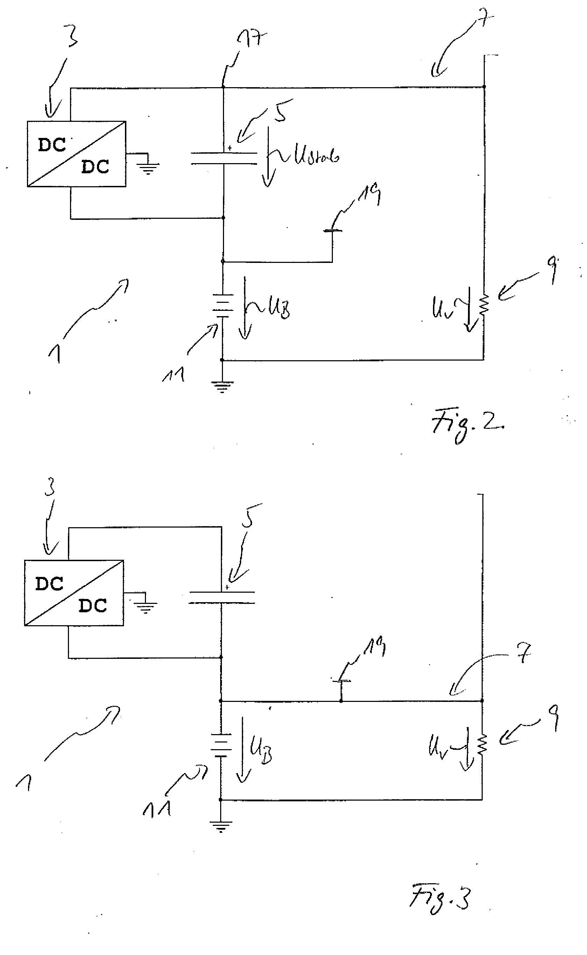

Die Funktionsweise der Spannungsstabilisierungseinrichtung 1 wird im Folgenden anhand der Fig. 2 und der Fig. 3 erläutert. Die Fig. 2 zeigt ein Schaltbild der Spannungsstabilisierungseinrichtung 1 in einem ersten Betriebszustand.

Der erste Betriebszustand wird durch die oben erwähnte Steuereinrichtung während einer Spannungsschwankung bzw. eines Spannungseinbruchs, insbesondere aufgrund eines Startvorgangs des Kraftfahrzeugs eingeleitet. In diesem Fall schaltet der Umschalter 7 den Energiespeicher 5 in den Stromkreislauf, indem er eine serielle Verbindung zwischen dem Verbraucher 9 und einem Anschlusspunkt 17, der zwischen der DC/DC-Wandlerschaltung 3 und dem Pluspol des Energiespeichers 5 liegt, herstellt, während der weitere Anschlusspunkt 19 der Energiequelle 11 frei liegt. Dadurch wird sicher gestellt, dass die Spannung U_{V} am Verbraucher nicht sinkt, sondern vielmehr durch den Energiespeicher 5 stabilisiert wird. Die Stabilisierungsspannung U_{stab} gleicht also quasi den Spannungseinbruch am Verbraucher 9 aus.

Die Fig. 2 macht deutlich, dass in dem ersten Betriebszustand der Spannungsstabilisierungseinrichtung 1 der Strom von der Energiequelle 11 über den Energiespeicher 5 in die stabilisierte Last, d.h. in den Verbraucher 9 fließt. Auf diese Weise wird die abgesenkte Betriebsspannung U_{B} um die Stabilisierungsspannung U_{stab} des Energiespeichers 5 angehoben, wobei die Größe der Stabilisierungsspannung U_{stab} durch die Steuereinrichtung während des Aufladevorgangs "einstellbar" ist.

Die Fig. 3 zeigt ein Schaltbild der Spannungsstabilisierungseinrichtung 1 in einem zweiten Betriebszustand.

Der zweite Betriebszustand wird durch die Steuereinrichtung eingeleitet, wenn ein Spannungseinbruch noch nicht eingetreten oder schon vorüber ist, also insbesondere vor oder nach einem Startvorgang des Kraftfahrzeugs während des "Normalbetriebs". In diesem Fall stellt der Umschalter 7 eine Verbindung zwischen dem Anschlusspunkt 19 der Energiequelle 11 und dem Verbraucher 9 her, sodass also der Verbraucher 9 direkt mit der Energiequelle 11 in Verbindung steht und der Energiespeicher 5 quasi abgeschaltet ist. Der Strom fließt dann von der Energiequelle 11 statt über den Energiespeicher 5 direkt zu dem Verbraucher 9. Folglich liegt an dem Verbraucher auch nur die Betriebsspannung U_{B} an, d.h. es gilt im Wesentlichen U_{V}= U_{B}.

In dem zweiten Betriebszustand gemäß Fig. 3 wird der Energiespeicher 5 aus der Energiequelle 11 durch die DC/DC-Wandlerschaltung 3 aufgeladen, wobei der Aufladevorgang vorzugsweise durch die Steuereinrichtung gesteuert wird, die üblicherweise über einen Mikrocontroller verfügt. Die Steuereinrichtung überwacht vorzugsweise den Ladezustand des Energiespeichers 5 und kann eine maximale Aufladespannung vorgeben.

Insgesamt zeigt sich, dass durch die Verwendung eines Energiespeichers 5, der im Bedarfsfall wenigstens einen spannungssensitiven Verbraucher 9 zuverlässig mit einer Stabilisierungsspannung versorgen kann und der darüber hinaus durch eine Energiequelle 11 über eine DC/DC-Wandlerschaltung 3 wieder aufladbar ist, eine kleinere DC/DC-Wandlerschaltung verwendet werden kann, wodurch der Bauraumbedarf und die Kosten der Spannungsstabilisierungseinrichtung 1 gemäß der Erfindung reduziert werden.

Bezugszeichenliste:
- 1: Spannungsstabilisierungseinrichtung
- 3: DC/DC-Wandlerschaltung
- 5: Energiespeicher
- 7: Umschalter
- 9: spannungssensitiver Verbraucher
- 11: Energiequelle
- 13: erster Schaltzustand
- 15: zweiter Schaltzustand

- 17: Anschlusspunkt
- 19: Anschlusspunkt
- U_{stab}: Stabilisierungsspannung
- U_{B}: Betriebsspannung
- U_{V}: Verbraucherspannung

## Patentansprüche

1. Spannungsstabilisierungseinrichtung (1) für ein Kraftfahrzeugbordnetz zur Stabilisierung wenigstens eines spannungssensitiven Verbrauchers (), **dadurch gekennzeichnet, dass**
eine DC/DC-Wandlerschaltung (3), ein Energiespeicher (5) und ein Umschalter (7) vorgesehen sind, die derart ausgebildet und angeordnet sind, dass der Energiespeicher (5) durch die DC/DC-Wandlerschaltung (3) aufladbar ist und der Umschalter (7) eine elektrische Verbindung zwischen dem wenigstens einen spannungssensitiven Verbraucher (9) und dem Energiespeicher (5) derart ermöglicht, dass der Energiespeicher (5) im Bedarfsfall eine Stabilisierungsspannung (U_{stab}) an dem Verbraucher (9) bereitstellt.

2. Spannungsstabilisierungseinrichtung nach Anspruch 1,
**dadurch gekennzeichnet, dass**
es sich bei dem Energiespeicher (5) um einen Kondensator, insbesondere um einen Doppelschicht-Kondensator handelt.

3. Spannungsstabilisierungseinrichtung nach Anspruch 1 oder 2,
**dadurch gekennzeichnet, dass**
die DC/DC-Wandlerschaltung (3) und der Energiespeicher (5) parallel geschaltet sind.

4. Spannungsstabilisierungseinrichtung nach einem der vorhergehenden Ansprüche,
**dadurch gekennzeichnet, dass**
in einem Normalbetrieb des Kraftfahrzeugbordnetzes eine Betriebsspannung (U_{B}) an dem wenigstens einen spannungssensitiven Verbraucher (9) ausschließlich durch eine Energiequelle (11) bereitgestellt wird.

5. Spannungsstabilisierungseinrichtung nach einem der vorhergehenden Ansprüche,
**dadurch gekennzeichnet, dass**
der Umschalter (7) als Relais ausgebildet ist.

6. Spannungsstabilisierungseinrichtung nach einem der vorhergehenden Ansprüche,
**dadurch gekennzeichnet, dass**
der Umschalter (7) derart umschaltbar angeordnet ist, dass während des Normalbetriebs des Kraftfahrzeugbordnetzes ausschließlich die durch die Energiequelle (11) erzeugte Betriebsspannung (U_{B}) an dem Verbraucher (9) anliegt, und dass im Falle eines Spannungseinbruchs im Kraftfahrzeugbordnetz zusätzlich die Stabilisierungsspannung (U_{stab}) des Energiespeichers (5) an dem Verbraucher (9) bereitgestellt wird.

7. Spannungsstabilisierungseinrichtung nach einem der vorhergehenden Ansprüche,
**dadurch gekennzeichnet, dass**
der Energiespeicher (5) ausschließlich während des Normalbetriebs des Kraftfahrzeugbordnetzes durch die DC/DC-Wandlerschaltung (3) aufladbar ist.

8. Spannungsstabilisierungseinrichtung nach einem der vorhergehenden Ansprüche,
**dadurch gekennzeichnet, dass**
eine Steuerungseinrichtung zur Steuerung der Aufladung des Energiespeichers (5) und zur Steuerung des Umschaltzeitpunktes des Umschalters (7) vorgesehen ist.
